# EUROPEAN PATENT APPLICATION

(11) **EP 3 881 963 A1**
(43) Date of publication of application: **22.09.2021**
(21) Application number: 19917784.1
(22) Date of filing: 18.11.2019
(51) Int. Cl.: B23K 26/34, B22F 3/105, B22F 3/16, B23K 26/064, B23K 26/21, B29C 64/153, B29C 64/209, B29C 64/241, B29C 64/268, B29C 64/393, B33Y 30/00, B33Y 50/02

(54) **THREE-DIMENSIONAL STACKING DEVICE AND FIBER REPLACEMENT METHOD**

(30) Priority: 05.03.2019 JP 2019039898
(71) Applicant: Mitsubishi Heavy Industries Machine Tool Co., Ltd., Ritto-shi, Shiga 520-3080 (JP)
(72) Inventor: HIRONO, Yoko, Ritto-shi, Shiga 520-3080 (JP); TAUCHI, Hiroyuki, Ritto-shi, Shiga 520-3080 (JP); YAMAMOTO, Yusuke, Ritto-shi, Shiga 520-3080 (JP)
(74) Representative: Studio Torta S.p.A.
(86) International application number: PCT/JP2019/045148
(87) International publication number: WO 2020/179140

(57) **Abstract**

A three-dimensional deposition device (1) includes: a deposition head (18) provided with a powder jetting port (44B), a light beam irradiation port (42B), and a fiber connection port (48) connected to a fiber (24); a head moving part (22) moving the deposition head (18) along a vertical direction; a base part (14) to which powder P is jetted and a light beam (L) is emitted from the deposition head (18); a base moving part (12) moving the base part (14) along a first direction and a second direction; and a rotation mechanism (20) connected to the deposition head (18) and rotating the deposition head (18) about a rotation axis crossing the vertical direction. The rotation mechanism (20) switches, by rotating the deposition head (18), a first state in which the fiber connection port (48) is opened upward in the vertical direction and a second state in which the fiber connection port (48) is opened in a direction crossing the upward vertical direction.

## Description

### Field

The present invention relates to a three-dimensional deposition device and a method for replacing a fiber.

### Background

In recent years, a deposited body forming method of forming a three-dimensional deposited body using powder, such as metal powder as a material, has been put to practical use. For example, Patent Literature 1 discloses a three-dimensional deposition device of a deposition type manufacturing a three-dimensional deposited body by jetting powder while emitting a light beam from a deposition head. In the deposition type as disclosed in Patent Literature 1, generally, a fiber to guide the light beam is connected to the deposition head.

### Citation List

### Patent Literature

Patent Literature 1: Japanese Patent Application Laid-open No. 2015-196264

### Summary

### Technical Problem

The fiber connected to the deposition head is removed from the deposition head when maintenance is performed or the like. However, when the fiber is removed, a foreign substance, such as dust, may enter the deposition head from a part connected to the fiber. Entrance of a foreign substance may cause damage to the deposition head, the fiber, and/or a light source connected to the deposition head due to application of the light beam to the foreign substance. Accordingly, the deposition head requires setting the position to which the fiber is connected to suppress entrance of a foreign substance. In addition, with a certain position to which the fiber is connected, that is, with certain relation between the incident position of the light beam and the outgoing position of the light beam, it may be required to increase the number of optical components in the deposition head and the device size may increase. For this reason, a three-dimensional deposition device is required to suppress entrance of a foreign substance in maintenance while suppressing increase in size of the device.

The present invention solves the problem described above, and an object of the present invention is to provide a three-dimensional deposition device and a method for replacing a fiber suppressing entrance of a foreign substance in maintenance while suppressing increase in size of the device.

### Solution to Problem

In order to solve the problem described above and achieve the object, a three-dimensional deposition device according to the present disclosure includes a deposition head provided with a powder jetting port from which powder is jetted, a light beam irradiation port from which a light beam is emitted, and a fiber connection port that is connected to a fiber guiding the light beam; a head moving part that moves the deposition head along a vertical direction; a base part to which the powder is jetted and the light beam is emitted from the deposition head; a base moving part that moves the base part along a first direction orthogonal to the vertical direction and a second direction orthogonal to the vertical direction and the first direction; and a rotation mechanism that is connected to the deposition head and rotates the deposition head about a rotation axis crossing the vertical direction. The rotation mechanism switches, by rotating the deposition head, between a first state in which the fiber connection port is opened upward in the vertical direction and a second state in which the fiber connection port is opened in a direction crossing the upward vertical direction.

The three-dimensional deposition device allows a fiber to be removed after switching to a second state, thereby enabling suppression of entrance of a foreign substance, and has a structure also switchable to a first state, thereby enabling suppression of increase in size of the device.

It is preferable that a maximum rotation angle of the rotation mechanism is larger than an angle made with a central axis of the deposition head with respect to the vertical direction in formation of the deposited body. The three-dimensional deposition device enables suppression of entrance of a foreign substance by bringing the orientation of the fiber connection port closer to the horizontal direction.

It is preferable that the fiber connection port is opened in a direction crossing the vertical direction at an angle of 85° to 95° in the second state. The three-dimensional deposition device enables suppression of entrance of a foreign substance by bringing the orientation of the fiber connection port closer to the horizontal direction.

It is preferable that the fiber connection port is provided in a surface opposite to a surface provided with the light beam irradiation port in the deposition head. The three-dimensional deposition device simplifies the optical path of the light beam by providing the light beam irradiation port and the powder jetting port in opposite surfaces, and suppresses increase in size of the device.

It is preferable that the rotation mechanism includes a first plate part having a front surface crossing a plane orthogonal to the vertical direction; and a second plate part that is fixed on the deposition head and rotatably connected to the first plate part in a state in which a front surface thereof contacts the front surface of the first plate part, and the rotation mechanism switches between the first state and the second state by rotation of the second plate part with respect to the first plate part. The three-dimensional deposition device is capable of properly switching the first state and the second state, with the first plate part and the second plate part serving as a rotation mechanism.

It is preferable that the rotation mechanism includes a rotation shaft portion that serves as a rotation axis of the second plate part with respect to the first plate part, a positioning portion that positions the second plate part in the second state, and a fixing portion that fixes the second plate part in the second state. The three-dimensional deposition device is capable of rotating the second plate part about the rotation shaft portion and being fixed in the second state with the fixing part in a state of being positioned with the positioning portion. With this structure, the three-dimensional deposition device is capable of being properly switched to the second state.

A removable cover part that covers the fiber may be further included, the cover part not interfering with the deposition head in the first state but interfering with the deposition head in the second state. The three-dimensional deposition device is capable of suppressing entrance of a foreign substance by properly switching between the first state and the second state even when the cover part is provided.

It is preferable that a pulley part that is provided above the deposition head in the vertical direction and movably holds the fiber is further included. The three-dimensional deposition device is capable of properly retaining the fiber by holding the fiber with the pulley part.

In order to solve the problem described above and achieve the object, a method according to the present disclosure is for replacing a fiber from a three-dimensional deposition device. The three-dimensional deposition device includes a deposition head provided with a powder jetting port from which powder is jetted, a light beam irradiation port from which a light beam is emitted, and a fiber connection port that is connected to a fiber guiding the light beam; a head moving part that moves the deposition head along a vertical direction; a base part to which the powder is jetted and the light beam is emitted from the deposition head; and a base moving part that moves the base part along a first direction orthogonal to the vertical direction and a second direction orthogonal to the vertical direction and the first direction. The method includes a first rotation step of rotating the deposition head about a rotation axis crossing the vertical direction from a first state in which the fiber is attached to the fiber connection port and the fiber connection port is oriented upward in the vertical direction to switch the deposition head to a second state in which the fiber connection port crosses the upward vertical direction; a removal step of removing the fiber from the fiber connection port of the deposition head switched to the second state; an attachment step of attaching the fiber or another fiber to the fiber connection port of the deposition head from which the fiber has been removed by the removal step; and a second rotation step of rotating the deposition head to which the fiber has been attached by the attachment step to switch the deposition head from the second state to the first state. This method allows a fiber to be removed after switching to a second state, thereby enabling suppression of entrance of a foreign substance, and has a structure also switchable to a first state, thereby enabling suppression of increase in size of the device.

### Advantageous Effects of Invention

The present invention enables suppression of entrance of a foreign substance in maintenance while increase in size of the device is suppressed.

### Brief Description of Drawings

FIG. 1 is a schematic diagram of a three-dimensional deposition device according to the present embodiment.
FIG. 2 is a schematic diagram of the three-dimensional deposition device according to the present embodiment.
FIG. 3 is a schematic diagram of a deposition head according to the present embodiment.
FIG. 4 is a schematic diagram of a first plate part.
FIG. 5 is a schematic diagram of a second plate part.
FIG. 6 is a schematic diagram of a rotation mechanism according to the present embodiment.
FIG. 7 is a schematic diagram of the rotation mechanism according to the present embodiment.
FIG. 8 is a flowchart illustrating a flow of a method for replacing a fiber.
FIG. 9 is a schematic diagram illustrating another example of the rotation mechanism according to the present embodiment.
FIG. 10 is a schematic diagram illustrating another example of the rotation mechanism according to the present embodiment.

### Description of Embodiments

A preferred embodiment of the present invention will be explained in detail hereinafter with reference to attached drawings. The present invention is not limited to the embodiment. When there are a plurality of embodiments, the present invention also includes a structure obtained by combining the embodiments.

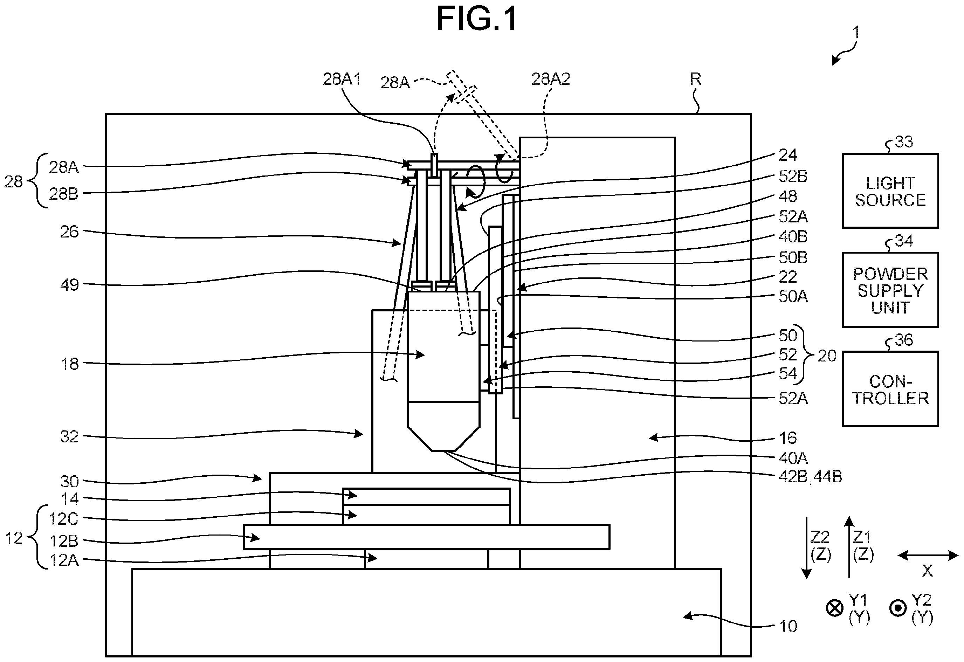

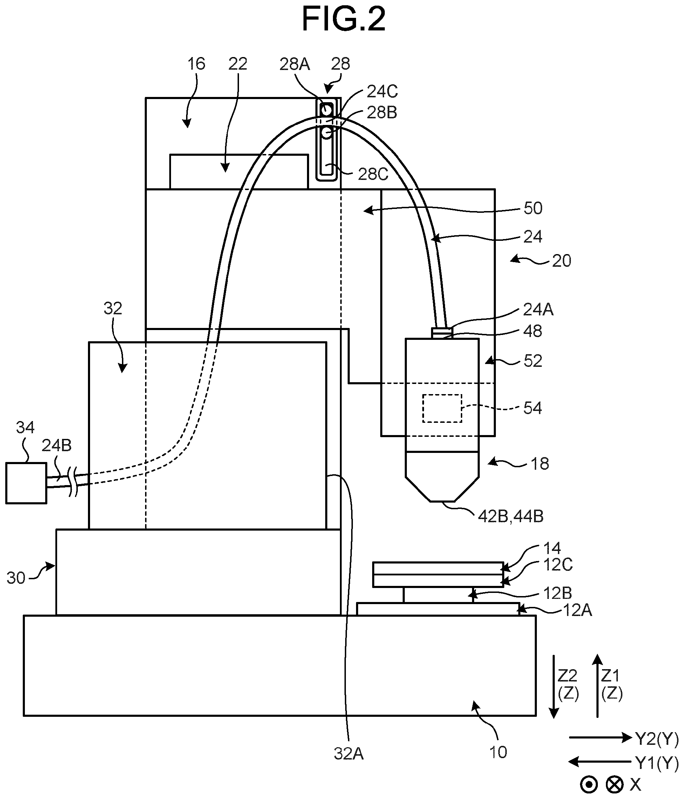

FIG. 1 and FIG. 2 are schematic diagrams of a three-dimensional deposition device according to the embodiment. In the present embodiment, a direction in a horizontal plane serves as a direction X, a direction orthogonal to the direction X in the horizontal plane serves as a direction Y, and a direction orthogonal to each of the direction X and the direction Y, that is, a vertical direction serves as a direction Z. In addition, one of directions extending along the direction Y serves as a direction Y1, and the other of directions extending along the direction Y, that is, a direction opposite to the direction Y1, serves as a direction Y2. In the present embodiment, the direction Y2 side of the three-dimensional deposition device 1 serves as the front side of the three-dimensional deposition device 1, and the direction Y1 side of the three-dimensional deposition device 1 serves as the back side of the three-dimensional deposition device 1. The front side of the three-dimensional deposition device 1 is a side on which the operator or the like operates the three-dimensional deposition device 1 to form a deposited body. In addition, one of directions extending along the direction Z serves as a direction Z1, and the other of directions extending along the direction Z, that is, a direction opposite to the direction Z1, serves as a direction Z2. In the present embodiment, the direction Z1 serves as a direction going upward in the vertical direction, and the direction Z2 serves as a direction going downward in the vertical direction. FIG. 1 is a schematic diagram of the three-dimensional deposition device 1 according to the present embodiment as viewed from the direction Y, and FIG. 2 is a schematic diagram of the three-dimensional deposition device 1 as viewed from the direction X.

As illustrated in FIG. 1, the three-dimensional deposition device 1 includes a stand part 10, a base moving part 12, a base part 14, a mount part 16, a deposition head 18, a rotation mechanism 20, a head moving part 22, a fiber 24, a tube 26, a pulley part 28, a holder part 30, a cover part 32, a light source unit 33, a powder supply unit 34, and a controller 36, in a three-dimensional deposition chamber R.

The three-dimensional deposition device 1 is a device forming a deposited body serving as a three-dimensional structure on the base part 14. The base part 100 is a member serving as a base on which a deposited body is formed. The base part 14 in the present embodiment is a plate-like member. The base part 14 is not limited thereto. The base part 14 may be a member serving as a base of a deposited body and separated from the deposited body, or a member combined with the deposited body and serving as part of the deposited body.

The stand part 10 is a stand supporting the base moving part 12 and/or the base part 14. The base moving part 12 is provided on the stand part 10 and supports the base part 14. The base moving part 12 is a mechanism moving the base part 14 by control of the controller 36. The base moving part 12 includes a first moving part 12A, a second moving part 12B, and a rotating part 12C. The first moving part 12A is a mechanism moving the base part 14 in a first direction extending along the horizontal direction (orthogonal to the vertical direction). In the present embodiment, the first moving part 12A moves the base part 14 along the direction Y. More specifically, in the present embodiment, the second moving part 12B, the rotating part 12C, and the base part 14 are disposed on the first moving part 12A, and the first moving part 12A moves the second moving part 12B, the rotating part 12C, and the base part 14 along the direction Y.

The second moving part 12B is a mechanism moving the base part 14 in a second direction along the horizontal direction (orthogonal to the vertical direction), and the second direction is a direction orthogonal to the first direction. In the present embodiment, the second moving part 12B moves the base part 14 along the direction X. More specifically, in the present embodiment, the rotating part 12C and the base part 14 are disposed on the second moving part 12B, and the second moving part 12B moves the rotating part 12C and the base part 14 along the direction X. In the present embodiment, the first moving part 12A and the second moving part 12B are sliders moving the base part 14 placed thereon, but may be mechanisms other than sliders.

The rotating part 12C is a rotation table on which the base part 14 is disposed. The rotating part 12C rotates about at least one rotation axis to rotate the base part 14 disposed thereon. In the present embodiment, the rotating part 12C rotates the base part 14, with mutually orthogonal three rotation axes serving as rotation centers.

As described above, the base moving part 12 moves the base part 14 along the direction X and the direction Y with the first moving part 12A and the second moving part 12B. In addition, the base moving part 12 rotates the base part 14 with the rotating part 12C about the three rotation axes serving as the rotation centers. Specifically, the base moving part 12 is a five-axis moving mechanism that moves the base part 14 along the two axes and rotates the base part 14 about the three rotation axes. However, the base moving part 12 is not limited to a five-axis moving mechanism, but may be, for example, a two-axis moving mechanism moving the base part 14 along the direction X and the direction Y.

The mount part 16 is a pedestal provided in the three-dimensional deposition chamber R, and provided with the head moving part 22 in the present embodiment.

The deposition head 18 is provided on the direction Z1 side of the base part 14, that is, above the base part 14 in the vertical direction. The deposition head 18 emits a light beam L from a light beam irradiation port 42B toward the base part 14, and jets powder P from a powder jetting port 44B toward the base part 14 to form a deposited body on the base part 14. Specifically, the three-dimensional deposition device 1 according to the present embodiment is a deposition-type three-dimensional deposition device including the deposition head 18.

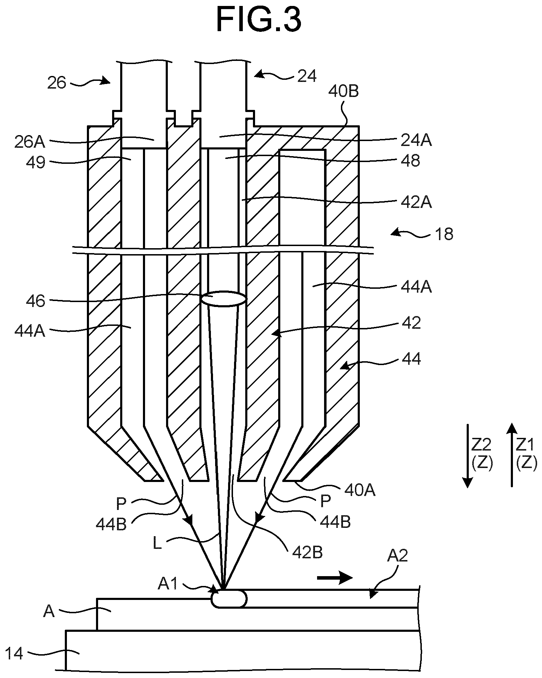

FIG. 3 is a schematic diagram of the deposition head according to the present embodiment. As illustrated in FIG. 3, the deposition head 18 includes an inner tube 42 and an outer tube 44. The outer tube 44 is a tube-like member, and has a diameter reduced toward the distal end thereof, that is, in the direction Z2. The inner tube 42 is also a tube-like member, and has a diameter reduced toward the distal end thereof, that is, in the direction Z2. Because the inner tube 42 is inserted into the outer tube 44, the inner tube 42 and the outer tube 44 form a double tube. In the deposition head 18, a space on the inner circumferential surface side in the inner tube 42 serves as a beam path 42A through which the light beam L passes. In the deposition head 18, a space between the outer circumferential surface of the inner tube 42 and an inner circumferential surface of the outer tube 44 serves as a powder channel 44A through which powder P passes. Specifically, the powder channel 44A serves as a channel having a shape surrounding the circumference of the beam path 42A. In the present embodiment, the powder channel 44A is disposed around the outer circumference of the beam path 42A concentrically.

In the deposition head 18, the light beam irradiation port 42B is opened at an end portion 40A on the direction Z2 side. In addition, the deposition head 18 is provided with a fiber connection port 48 at an end portion 40B on the direction Z1 side, that is, an end portion opposite to the end portion 40A. The fiber connection port 48 is an opening provided in the end portion 40B. The light beam irradiation port 42B and the fiber connection port 48 communicate with each other via the beam path 42A. Specifically, the light beam irradiation port 42B is an opening on the direction Z2 side of the beam path 42A, and the fiber connection port 48 is an opening on the direction Z1 side of the beam path 42A. In addition, the deposition head 18 is provided with an optical element 46 in a position between the light beam irradiation port 42B and the fiber connection port 48 in the beam path 42A. The optical element 46 includes, for example, a collimate lens collimating the light beam L and a condenser lens condensing the collimated light beam L. However, the structure of the optical element 46 is not limited thereto, but may be any structure.

The fiber connection port 48 is connected to the fiber 24. The fiber 24 is a fiber connected to the light source unit 33 serving as the light source of the light beam L, and an end portion 24A thereof is connected to the fiber connection port 48. The fiber 24 receives the light beam L incident thereon from the light source unit 33, guides the incident light beam L to the end portion 24A, and emits the light beam L from the end portion 24A to the inside of the beam path 42A of the deposition head 18. The light beam L emitted into the beam path 42A advances through the inside of the beam path 42A in the direction Z2, passes through the optical element 46, and is emitted to the outside of the deposition head 18 from the light beam irradiation port 42B. The light beam L emitted from the light beam irradiation port 42B advances in the direction Z2 to irradiate the base part 14.

In the deposition head 18, the powder jetting port 44B is opened in the end portion 40A on the direction Z2 side. The powder jetting port 44B is opened to surround the light beam irradiation port 42B. In addition, the deposition head 18 is provided with a tube connection port 49 on the end portion 40B on the direction Z1 side. The tube connection port 49 is an opening provided in the end portion 40B. The powder jetting port 44B and the tube connection port 49 communicate with each other via the powder channel 44A. Specifically, the powder jetting port 44B is an opening on the direction Z2 side of the powder channel 44A, and the tube connection port 49 is an opening on the direction Z1 side of the powder channel 44A.

The tube connection port 49 is connected to the tube 26. The tube 26 is a tube connected to the powder supply unit 34 serving as a tank storing powder P therein, and an end portion 26A thereof is connected to the tube connection port 49. The tube 26 guides powder P from the powder supply unit 34 to the end portion 26A, and supplies the powder P to the inside of the powder channel 44A of the deposition head 18 from the end portion 26A. The powder P supplied into the powder channel 44A flows through the inside of the powder channel 44A in the direction Z2, and is jetted to the outside of the deposition head 18 from the powder jetting port 44B. The powder P jet from the powder jetting port 44B advances in the direction Z2 and is jetted toward the base part 14.

In this structure, the light beam L is emitted with a predetermined spot diameter toward the base part 14. In the example of FIG. 3, the light beam L is emitted such that the spot diameter thereof, that is, the convergence position of the light beam, is superimposed on a base material A on the base part 14. The base material A may be a deposited body being deposited with the three-dimensional deposition device 1, or a member serving as a base material of the deposited body. The base material A is molten with the light beam L to form a molten pool A1 acquired by melting of the base material A. The powder P is jetted with a certain convergence diameter toward the base part 14. The powder P is jetted toward the molten pool A1, that is, such that the convergence position thereof is superposed on the molten pool A1. Accordingly, the powder P jetted from the powder jetting port 44B is molten in the molten pool A1. Because the base part 14 is moved with respect to the deposition head 18, the position irradiated with the light beam L changes. For this reason, the portion irradiated with the light beam L and forming the molten pool A1 is cooled and solidified because emission of the light beam L thereto is stopped, and forms a bead A2. A deposited body is formed by depositing beads A2 in a three-dimensional manner.

The light beam L in the present embodiment is laser light, but not limited to laser light. The light beam L may be an electron beam or the like. The powder P in the present embodiment is metal powder, but is not limited to metal powder as long as it is powder.

In the example illustrated in FIG. 1 and FIG. 3, the fiber 24 transferring the light beam L and the tube 26 supplying the powder P are connected to the deposition head 18, but other tubes may be connected to the deposition head 18. For example, the deposition head 18 may be connected to a tube supplying gas to the deposition head 18 and/or a tube supplying cooling water to the deposition head 18. These tubes are preferably also connected to the end portion 40B of the deposition head 18. Examples of the gas supplied with the tubes connected to the deposition head 18 include gas supplied to the powder channel 44A to cause the powder P to flow, and inert gas supplied to cover the outer circumference of the part supplied with the powder P and the light beam L.

With reference to FIG. 1 again, the rotation mechanism 20 is a mechanism that is connected to the deposition head 18 and rotates the deposition head 18 about a rotation axis crossing the direction Z. The rotation mechanism 20 is attached to the mount part 16 via the head moving part 22, but may be attached to the mount part 16 not via the head moving part 22, or may not be attached to the mount part 16. Specifically, the rotation mechanism 20 may be attached to any desired position.

As illustrated in FIG. 1, the rotation mechanism 20 includes a first plate part 50, a second plate part 52, and a connecting part 54. The first plate part 50 is a plate-like member. In the present embodiment, the first plate part 50 has a structure in which a back surface 50B being an opposite surface of a front surface 50A is attached to the mount part 16 via the head moving part 22. A front surface 52A of the second plate part 52 is rotatably attached to the front surface 50A of the first plate part 50. The connecting part 54 is a member connecting the second plate part 52 with the deposition head 18. The connecting part 54 connects, for example, a back surface 52B serving as an opposite surface of the front surface 52A of the second plate part 52 with a side surface (a surface on the direction X side in this example) of the deposition head 18. The connecting part 54 connects the second plate part 52 with the deposition head 18 such that their relative positions are fixed. Specifically, the position of the deposition head 18 is fixed with respect to the second plate part 52. The detailed structure of the rotation mechanism 20 will be described later.

The head moving part 22 moves the deposition head 18 along the direction Z. In the present embodiment, the head moving part 22 is attached to the mount part 16. The head moving part 22 moves the rotation mechanism 20 and the deposition head 18 connected to the rotation mechanism 20 along the direction Z. In the present embodiment, the head moving part 22 is a slider moving the rotation mechanism 20 and the deposition head 18, but may be a mechanism other than a slider. The head moving part 22 is not necessarily attached to the mount part 16, but may be attached to any desired position.

As illustrated in FIG. 1 and FIG. 2, the pulley part 28 is provided on the direction Z1 side beyond the deposition head 18, and movably holds the fiber 24. The pulley part 28 includes a pulley 28A and a pulley 28B. The pulley 28A and the pulley 28B are shaft-like members. The pulley 28A extends from the mount part 16 along the direction X toward the side on which the deposition head 18 is provided, and rotates about an axis extending along the direction X. The pulley 28B is provided on the direction Z2 side beyond the pulley 28A. The pulley 28B extends from the mount part 16 along the direction X toward the side on which the deposition head 18 is provided, and rotates about an axis extending along the direction X. In addition, as illustrated in FIG. 2, the pulley 28A and the pulley 28B are provided into a slider part 28C, and move along the direction Z in the slider part 28C. The pulley 28A and the pulley 28B are connected to the rotation mechanism 20 and move along the direction Z as one unitary piece with the rotation mechanism 20 and the deposition head 18.

The fiber 24 is provided between the pulley 28A and the pulley 28B. As illustrated in FIG. 2, in the fiber 24, a middle portion 24C that is a portion between the end portion 24A and an end portion 24B is positioned between the pulley 28A and the pulley 28B. The end portion 24A is connected to the fiber connection port 48 of the deposition head 18, and the end portion 24B is connected to the light source unit 33. Specifically, the fiber 24 is held at the middle portion 24C between the pulley 28A and the pulley 28B. Because the pulley 28A and the pulley 28B rotate, the fiber 24 is movable with respect to the pulley 28A and the pulley 28B.

As illustrated in FIG. 1, the tube 26 is also movably held with the pulley part 28, in the same manner as the fiber 24. The fiber 24 and the tube 26 are held with the pulley part 28, with a partition 28A1 provided on the pulley 28A interposed therebetween, such that the fiber 24 and the tube 26 do not contact each other. When any tube other than the fiber 24 and the tube 26 is connected to the deposition head 18, the tube is preferably also held movably with the pulley part 28, in the same manner as the fiber 24.

The pulley part 28 has a structure from which the fiber 24 and the tube 26 are removable. As illustrated in FIG. 1, the pulley 28A rotates in the direction Y, with a portion 28A2 on the mount part 16 side serving as the center. In this manner, the pulley 28A is opened as illustrated with broken lines in FIG. 1 to form a space enabling attachment and removal of the fiber 24 and the tube 26.

As illustrated in FIG. 1 and FIG. 2, the holder part 30 is a base on which the cover part 32 is provided. The cover part 32 is a cover covering the fiber 24. As illustrated in FIG. 2, the cover part 32 is disposed on the direction Y1 side of the deposition head 18, that is, the back side of the three-dimensional deposition device 1 beyond the deposition head 18. A surface 32A of the cover part 32 is disposed to be opposed to the deposition head 18 in the direction Y. It can be said that the surface 32A of the cover part 32 is provided between the fiber 24 and the deposition head 18 in the direction Y. The cover part 32 is opened on the direction Z1 side of the deposition head 18, and the fiber 24 is inserted into the cover part 32, that is, toward the direction Y1 side beyond the surface 32A, through the opening on the direction Z1 side. The cover part 32 covers the tube 26 in addition to the fiber 24. When any tube other than the fiber 24 and the tube 26 is connected to the deposition head 18, the tube is preferably also covered with the cover part 32, in the same manner as the fiber 24.

By covering the fiber 24 as described above, the cover part 32 suppresses transmission of heat generated with the light beam L or the like in deposition to the fiber 24. The cover part 32 is configured to be detachable from the three-dimensional deposition device 1.

The controller 36 illustrated in FIG. 1 is a control device controlling the three-dimensional deposition device 1, that is, a numerical value control device in this example. The controller 36 controls the base moving part 12 to move the base part 14, controls the head moving part 22 to move the deposition head 18 along the direction Z, controls emission of the light beam L from the deposition head 18, and controls jetting of the powder P from the deposition head 18. In the present embodiment, the rotation mechanism 20 is a mechanism rotated by manpower or the like, not a mechanism automatically rotating by control of the controller 36. However, the rotation mechanism 20 may rotate by control of the controller 36.

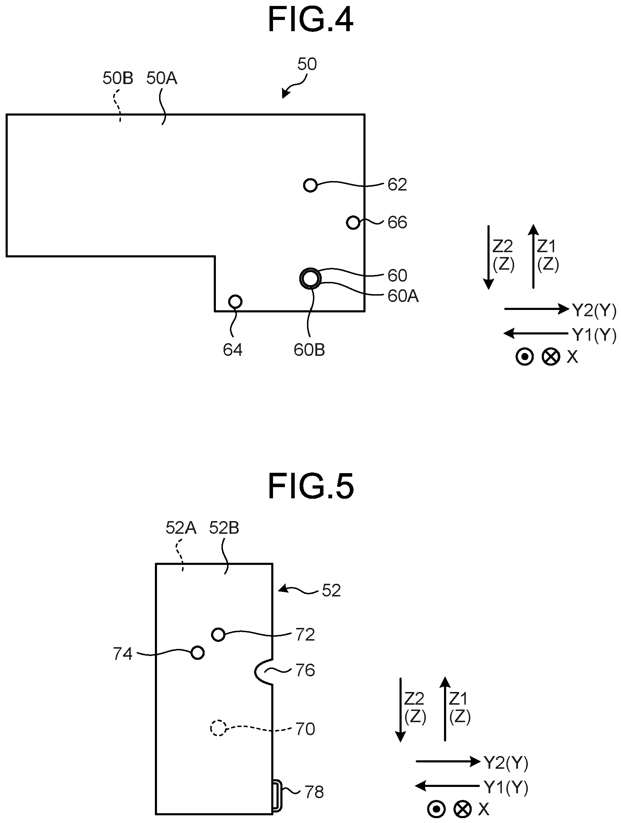

The following is a detailed explanation of the rotation mechanism 20. The rotation mechanism 20 switches the deposition head 18 to the first state and the second state by rotating the deposition head 18. The first state and the second state will be described later. First, structures of the first plate part 50 and the second plate part 52 will be explained hereinafter. FIG. 4 is a schematic diagram of the first plate part. As illustrated in FIG. 1 and FIG. 4, the first plate part 50 of the rotation mechanism 20 has a structure in which the front surface 50A and the back surface 50B extend along the direction Z. In the example of FIG. 4, the first plate part 50 has a shape in which the front surface on the direction Y2 side is larger than that on the direction Y1 side, but such a shape is a mere example.

As illustrated in FIG. 4, the first plate part 50 is provided with a rotation shaft bearing portion 60, opening portions 62 and 64, and a projecting portion 66. The rotation shaft bearing portion 60 forms a rotation shaft portion 20a of the rotation mechanism 20 together with a shaft portion 70 of the second plate part 52 described later. The rotation shaft bearing portion 60 includes an opening portion 60A and a bearing portion 60B. The opening portion 60A is a hole opened in the front surface 50A. The opening portion 60A is provided such that the central axis thereof is orthogonal to the front surface 50A, that is, the central axis extends along the direction X in this example. The bearing portion 60B is a bearing inserted into the opening portion 60A. The bearing portion 60B is, for example, a roller bearing or a sliding bearing.

The opening portions 62 and 64 are through holes extending from the front surface 50A to the back surface 50B. The opening portions 62 and 64 form fixing portions 20b1 and 20b2 of the rotation mechanism 20, respectively, together with opening portions 72 and 74 of the second plate part 52 described later. The projecting portion 66 is a projection projecting from the front surface 50A. The projecting portion 66 forms a positioning portion 20c1 of the rotation mechanism 20 together with a cutout portion 76 of the second plate part 52 described later. The positions in which the rotation shaft bearing portion 60, the opening portions 62 and 64, and the projecting portion 66 are provided are not limited to those in the example of FIG. 4.

FIG. 5 is a schematic diagram of the second plate part. FIG. 5 illustrates the second plate part 52 in an orientation of the first state. As illustrated in FIG. 5, the second plate part 52 has a structure in which the front surface 52A and the back surface 52B extend along the direction Z. The second plate part 52 is provided with the shaft portion 70, the opening portions 72 and 74, and the cutout portion 76. The shaft portion 70 is a shaft-like member projecting from the front surface 52A along the direction X. The opening portions 72 and 74 are through holes extending from the front surface 52A and the back surface 52B. The cutout portion 76 is a cutout provided in a side surface of the second plate part 52. The second plate part 52 may include a grip portion 78 on the side surface. The grip portion 78 is a member to be gripped by the operator. The operator can rotate the second plate part 52 by gripping the grip portion 78 and applying moment in the rotation direction to the second plate part 52.

As explained above, the front surface 50A of the first plate part 50 and the front surface 52A of the second plate part 52 extend along the direction Z, but are not limited to the structure of extending along the direction Z. For example, it suffices that the front surface 50A of the first plate part 50 and the front surface 52A of the second plate part 52 are not orthogonal to the direction Z. In other words, it suffices that the front surface 50A of the first plate part 50 and the front surface 52A of the second plate part 52 are arranged to cross a plane orthogonal to the direction Z.

The second plate part 52 is rotatably connected to the first plate part 50. More specifically, as illustrated in FIG. 1, the second plate part 52 is connected to the first plate part 50 such that the front surface 52A contacts the front surface 50A of the first plate part 50. In addition, the second plate part 52 is connected to the deposition head 18 at the back surface 50B opposite to the front surface 50A contacting the first plate part 50. The following is an explanation of the structure in which the second plate part 52 is connected to the first plate part 50.

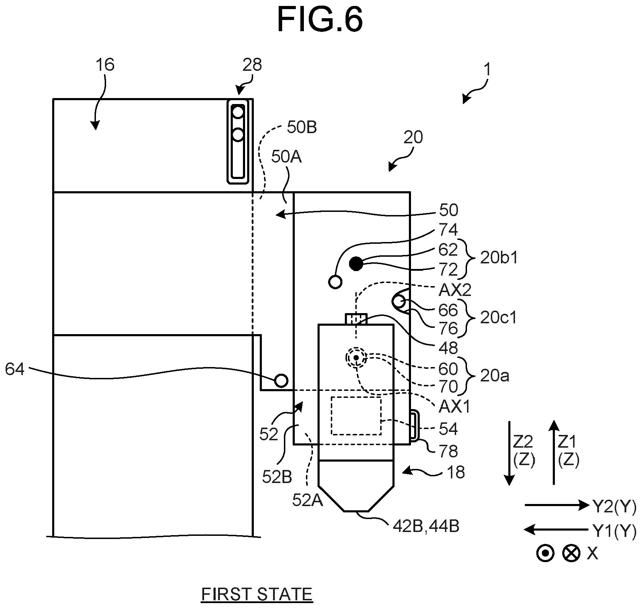

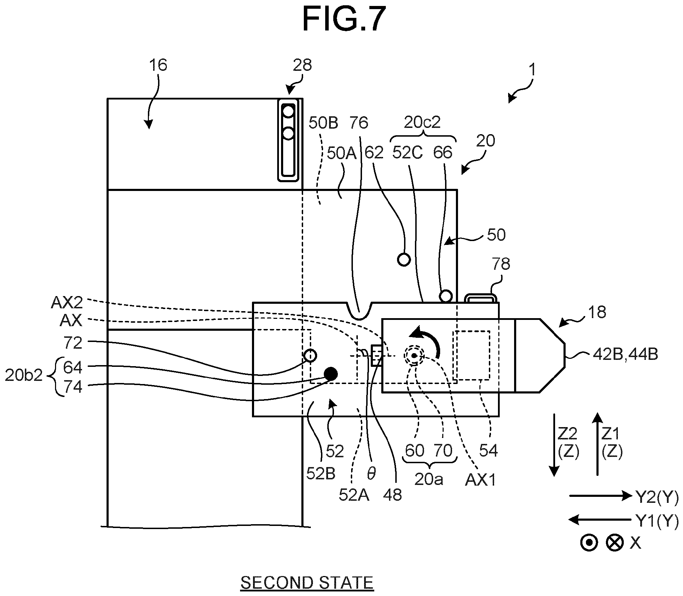

FIG. 6 and FIG. 7 are schematic diagrams of the rotation mechanism according to the present embodiment. FIG. 6 illustrates the first state, and FIG. 7 illustrates the second state. As illustrated in FIG. 6, the first state is a state in which the fiber connection port 48 of the deposition head 18 attached to the second plate part 52 is opened to the direction Z1 side. It can also be said that the first state is a state in which the direction going from the center of the deposition head 18 to the fiber connection port 48 extends along the direction Z1. It can also be said that the first state is a state in that the fiber connection port 48 is opened to the direction Z1 side and, when the central axis of the fiber connection port 48 is referred to as the central axis AX2, the central axis AX2 extends along the direction Z1. It can also be said that the first state is a state in which the light beam irradiation port 42B and the powder jetting port 44B of the deposition head 18 are opened to the direction Z2 side.

As illustrated in FIG. 6, the first plate part 50 and the second plate part 52 are connected such that the rotation shaft bearing portion 60 of the first plate part 50 and the shaft portion 70 of the second plate part 52 are superimposed. More specifically, the front surface 52A of the second plate part 52 contacts the front surface 50A of the first plate part 50, and the shaft portion 70 provided on the front surface 52A is inserted into the rotation shaft bearing portion 60. The shaft portion 70 is rotatable in a state of being inserted into the rotation shaft bearing portion 60. Specifically, because the shaft portion 70 serves as the rotation shaft of the second plate part 52, it can be said that the rotation shaft bearing portion 60 and the shaft portion 70 form the rotation shaft portion 20a. As described above, the rotation shaft portion 20a in the present embodiment is a mechanism in which the shaft portion 70 rotates in the rotation shaft bearing portion 60, but is not limited to such a structure of the shaft and the bearing, as long as it is a rotatable mechanism.

In addition, in the first state, the opening portion 62 of the first plate part 50 and the opening portion 72 of the second plate part 52 are superimposed as viewed from the direction X. In the present embodiment, a member, such as a bolt, is inserted into the opening portion 62 and the opening portion 72 to fix the first plate part 50 and the second plate part 52 in a state in which the opening portion 62 and the opening portion 72 are superimposed. In this manner, the first plate part 50 and the second plate part 52 are fixed in a state in which the opening portion 62 and the opening portion 72 are superimposed, that is, in the first state. As described above, the opening portion 62 and the opening portion 72 serve as the fixing portion 20b1 fixing the first plate part 50 and the second plate part 52 in the first state. However, the fixing portion 20b1 fixing them in the first state is not limited to the opening portion 62 and the opening portion 72, but may be another structure.

In addition, the cutout portion 76 of the second plate part 52 and the projecting portion 66 of the first plate part 50 are provided in positions to enable superimposition of the opening portion 62 and the opening portion 72 in a state in which the projecting portion 66 is positioned in the cutout portion 76. In other words, the cutout portion 76 and the projecting portion 66 are provided in positions to achieve the first state, the state in which the projecting portion 66 is positioned in the cutout portion 76. For this reason, for example, when the three-dimensional deposition device 1 is changed from the second state to the first state, the second plate part 52 is rotated to acquire a state in which the projecting portion 66 is positioned in the cutout portion 76, and a bolt is inserted into the opening portion 62 and the opening portion 72. In this manner, the first plate part 50 and the second plate part 52 are fixed in the first state. As described above, the cutout portion 76 and the projecting portion 66 serve as the positioning portion 20c1 to regulate the first plate part 50 and the second plate part 52 in the positions of the first state. However, the positioning portion 20c1 to regulate them in the positions of the first state is not limited to the cutout portion 76 and the projecting portion 66, but may be another structure.

The second state will be explained hereinafter. As illustrated in FIG. 7, the second state is a state in which the fiber connection port 48 of the deposition head 18 attached to the second plate part 52 is opened in a direction crossing the direction Z1. It can also be said that the second state is a state in which the direction going from the center of the deposition head 18 to the fiber connection port 48 crosses the direction Z1. It can also be said that the second state is a state in which the central axis AX2 extends along the direction crossing the direction Z1. Suppose that an angle θ is an angle formed between an imaginary axis AX extending along the direction Z1 and the central axis AX2. In this case, in the second state, the angle θ is preferably 85° to 95°. In addition, in the second state, the angle θ is more preferably 90°, that is, the central axis AX2 extends along the horizontal direction orthogonal to the direction Z1. In the second state, the light beam irradiation port 42B and the powder jetting port 44B of the deposition head 18 are also opened to the direction crossing the direction Z1 side. More specifically, the maximum rotation angle of the rotation mechanism 20 is larger than the angle made between the central axis AX2 of the deposition head 18 and the vertical direction in formation of the deposited body A.

As illustrated in FIG. 7, in the second state, the position of the second plate part 52 has changed from the first state, in the state in which the front surface 52A of the second plate part 52 contacts the front surface 50A of the first plate part 50 and the shaft portion 70 provided on the front surface 52A is inserted into the rotation shaft bearing portion 60. Specifically, the second state is a state after the second plate part 52 has rotated from the first state, about the rotation shaft portion 20a (shaft portion 70 and rotation shaft bearing portion 60). In the second state, the opening portion 64 of the first plate part 50 and the opening portion 74 of the second plate part 52 are superimposed as viewed from the direction X. In the present embodiment, a member being a bolt or the like is inserted into the opening portion 64 and the opening portion 74 to fix the first plate part 50 and the second plate part 52 in a state in which the opening portion 64 and the opening portion 74 are superimposed. In this manner, the first plate part 50 and the second plate part 52 are fixed in the state in which the opening portion 64 and the opening portion 74 are superimposed, that is, in the second state. As described above, the opening portion 64 and the opening portion 74 serve as the fixing portion 20b2 fixing the first plate part 50 and the second plate part 52 in the second state. However, the fixing portion 20b2 fixing them in the second state is not limited to the opening portion 64 and the opening portion 74, but may be another structure.

In addition, a side surface 52C of the second plate part 52 and the projecting portion 66 of the first plate part 50 are provided in positions to achieve superimposition of the opening portion 64 and the opening portion 74 in a state in which the side surface 52C contacts the projecting portion 66. In other words, the side surface 52C and the projecting portion 66 are provided in positions with which the second state is achieved in the state in which the side surface 52C contacts the projecting portion 66. Accordingly, for example, when the three-dimensional deposition device 1 is changed from the first state to the second state, the second plate part 52 is rotated to achieve the state in which the side surface 52C contacts the projecting portion 66. In this state, by inserting a bolt into the opening portion 64 and the opening portion 74, the first plate part 50 and the second plate part 52 are fixed in the second state. As described above, the side surface 52C and the projecting portion 66 serve as a positioning portion 20c2 regulating the first plate part 50 and the second plate part 52 in the positions of the second state. However, the positioning portion 20c2 regulating them in the positions of the second state is not limited to the side surface 52C and the projecting portion 66, but may be another structure.

The rotation mechanism 20 is in the following states in the first state and the second state. When the first state and the second state are switched, the second plate part 52 is rotated using the rotation axis AX1 serving as the central axis of the rotation shaft portion 20a as the rotation center. Because the position of the deposition head 18 is fixed with respect to the second plate part 52, the deposition head 18 rotates as one unitary piece with the second plate part 52, and the first state and the second state are switched. When the three-dimensional deposition device 1 is switched from the first state to the second state, in the first state of FIG. 6, for example, the bolt is removed from the opening portion 62 and the opening portion 72 to release fixing in the first state, and thereafter the second plate part 52 is rotated with the rotation axis AX1 serving as the rotation center (counterclockwise in the example of FIG. 6 and FIG. 7). Thereafter, the bolt is inserted into the opening portion 64 and the opening portion 74, for example, in the state illustrated in FIG. 7, and they are fixed in the second state. When the three-dimensional deposition device 1 is switched from the second state to the first state, in the second state illustrated in FIG. 7, for example, the bolt is removed from the opening portion 64 and the opening portion 74 to release fixing in the second state, and thereafter the second plate part 52 is rotated with the rotation axis AX1 serving as the center (clockwise in the example of FIG. 6 and FIG. 7). Thereafter, for example, in the state illustrated in FIG. 6, the bolt is inserted into the opening portion 62 and the opening portion 72 to fix them in the first state.

In the three-dimensional deposition device 1, the fiber 24 for transmitting the light beam L is removed from the deposition head 18, when maintenance or the like is executed. When the fiber 24 is removed, because the deposition head 18 is in the state in which the fiber connection port 48 is exposed, a foreign substance, such as dust, may enter the deposition head 18 through the fiber connection port 48. When the fiber connection port 48 is opened to the direction Z1 side, that is, upward in the vertical direction, a foreign substance is more likely to enter the deposition head 18 by gravity or the like. For this reason, the fiber connection port 48 is preferably opened in a direction crossing the upside in the vertical direction, that is, the horizontal direction orthogonal to the vertical direction. By contrast, the three-dimensional deposition device 1 preferably executes deposition of a deposited body in a state in which the light beam irradiation port 42B and the powder jetting port 44B are opened to the direction Z2 side, that is, downward in the vertical direction. Accordingly, it can be said that the three-dimensional deposition device 1 preferably has a structure in which the fiber connection port 48 crosses the upward vertical direction and the light beam irradiation port 42B is oriented downward in the vertical direction. To satisfy the structure, for example, it is considered to dispose the light beam irradiation port 42B in the bottom surface (surface on the lower side in the vertical direction) and dispose the fiber connection port 48 in the side surface (surface on the horizontal side) of the deposition head 18. However, this structure requires measures, such as bending the optical path of the light beam L, to guide the light beam L made incident on the fiber connection port 48 on the side surface to the light beam irradiation port 42B on the bottom surface, and may cause the necessity for increasing the number of inner optical components. This structure increases the size of the device.

In addition, it is also considered to properly execute deposition with the devised deposition conditions, with the structure in which the light beam irradiation port 42B is provided on the side surface, that is, with the structure in which the light beam L and/or the powder P are supplied horizontally or the like. In this case, for example, the three-dimensional deposition device 1 is designed to provide the fiber connection port 48 on a side surface opposite to the light beam irradiation port 42B. However, in this case, because the length of the deposition head 18 increases in the horizontal direction, the deposition head 18 may interfere with the cover part 32 adjacent to the deposition head 18 in the horizontal direction.

By contrast, the three-dimensional deposition device 1 according to the present embodiment is switchable between the first state in which the fiber connection port 48 is oriented upward in the vertical direction and the second state in which the fiber connection port 48 is oriented in the direction crossing the vertical direction, with the rotation mechanism 20. For this reason, when maintenance is performed, by removing the fiber 24 after switching to the second state, the light beam irradiation port 42B is opened to the direction crossing the upward vertical direction to suppress entrance of a foreign substance. In addition, by designing the three-dimensional deposition device 1 to orient the light beam irradiation port 42B downward in the vertical direction in the first state, increase in size of the device can be suppressed while deposition is properly executed in the first state. As described above, the three-dimensional deposition device 1 according to the present embodiment enables suppression of increase in size of the device while suppressing entrance of a foreign substance, by switching between the first state and the second state. In addition, the cover part 32 suppresses transmission of heat to the fiber 24 and the like during deposition. The three-dimensional deposition device 1 prevents interference of the deposition head 18 with the cover part 32 during deposition by switching to the first state when deposition requiring provision of the cover part 32 is executed. In addition, in the second state, because the deposition head 18 is oriented in the horizontal direction, the deposition head 18 may interfere with the cover part 32, but the cover part 32 can be removed because the temperature does not become high during maintenance in which the three-dimensional deposition device 1 is switched to the second state. Specifically, interference with the cover part 32 can be prevented by removing the cover part 32 before switching to the second state.

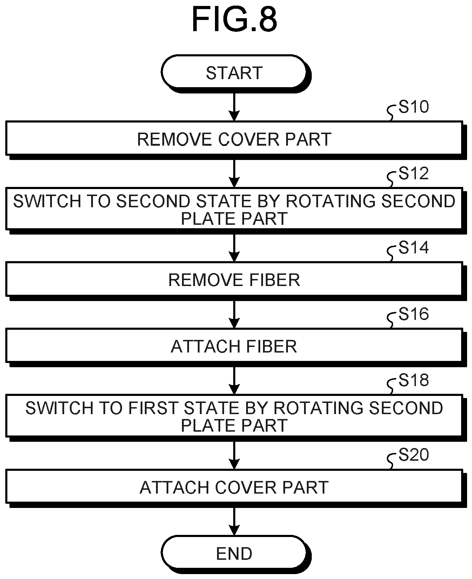

The following is an explanation of a flow of a method for replacing the fiber 24 on the basis of a flowchart. FIG. 8 is a flowchart illustrating a flow of a method for replacing the fiber. FIG. 8 illustrates a flow of replacing the fiber 24 in the first state in which the fiber 24 is connected to the deposition head 18. As illustrated in FIG. 8, when the fiber 24 is replaced, the cover part 32 is removed from the three-dimensional deposition device 1 in a state in which drive (supply of the powder P and the light beam L) of the deposition head 18 is stopped (Step S10). Thereafter, the three-dimensional deposition device 1 is switched from the first state to the second state by rotating the second plate part 52 with respect to the first plate part 50 (Step S12; first rotation step). In the second state, the deposition head 18 is in a state in which the fiber connection port 48 is opened to the direction crossing the downward direction in the vertical direction. The fiber 24 (and tube 26) is preferably removed from the pulley part 28 before the second plate part 52 is rotated, but the second plate part 52 may be rotated in a state in which the fiber 24 (and tube 26) is kept attached to the pulley part 28.

When the three-dimensional deposition device 1 is switched to the second state, the fiber 24 is removed (Step S14; removal step) from the fiber connection port 48 of the deposition head 18, and the three-dimensional deposition device is maintained at the second state until maintenance or the like is ended and the fiber 24 is attached again. Thereafter, when the fiber 24 is to be attached again, the fiber 24 is attached to the fiber connection port 48 of the deposition head 18 in the second state (Step S16; attachment step). The fiber 24 to be attached may be different from, or the same as, the removed fiber 24. For example, when the shape of the beam is to be changed, the fiber 24 is replaced with a different fiber. When the fiber 24 is attached, the second plate part 52 is rotated with respect to the first plate part 50 to switch the three-dimensional deposition device 1 from the second state to the first state (Step S18; second rotation step), the cover part 32 is attached again (Step S20), and the present process is ended. Attachment and removal of the cover part 32 are not mandatory.

As explained above, the three-dimensional deposition device 1 according to the present embodiment includes the deposition head 18 and the rotation mechanism 20. The deposition head 18 is provided with the powder jetting port 44B to jet the powder P, the light beam irradiation port 42B from which the light beam L is emitted, and the fiber connection port 48 connected to the fiber 24 guiding the light beam L. The rotation mechanism 20 is connected to the deposition head 18 and rotates the deposition head 18 about the rotation axis AX1 crossing the vertical direction. The rotation mechanism 20 switches between the first state and the second state. In the first state, the fiber connection port 48 is opened to the direction Z1 (upward in the vertical direction). In the second state, the fiber connection port 48 is opened to the direction crossing the direction Z1 (upward in the vertical direction), by rotating the deposition head 18.

The three-dimensional deposition device 1 according to the present embodiment is switchable between the first state in which the fiber connection port 48 is oriented upward in the vertical direction and the second state in which the fiber connection port 48 is oriented in the direction crossing the vertical direction, with the rotation mechanism 20. With this structure, the three-dimensional deposition device 1 allows the fiber 24 to be removed after switching to a second state, thereby enabling suppression of entrance of a foreign substance, and has a structure also switchable to the first state, thereby enabling suppression of increase in size of the device.

In addition, the fiber connection port 48 is opened in a direction crossing the direction Z (vertical direction) at an angle of 85° to 95° in the second state. By inclining the fiber connection port 48 with respect to the direction Z with such an angle, orientation of the fiber connection port 48 is set close to the horizontal direction, and entrance of a foreign substance can be suppressed. In addition, because the fiber connection port 48 is not oriented downward in the vertical direction, orientation of the fiber 24 upward in the vertical direction is suppressed in attachment of the fiber 24, and entrance of a foreign matter to the fiber 24 side is also suppressed.

The three-dimensional deposition device 1 preferably includes the head moving part 22 moving the deposition head 18 along the direction Z, the base part 14 to which the powder P is jetted and the light beam L is applied from the deposition head 18, and the base moving part 12. The base moving part 12 moves the base part 14 along the first direction orthogonal to the vertical direction and the second direction orthogonal to the vertical direction and the first direction. The three-dimensional deposition device 1 has a structure in which the deposition head 18 moves along an axis extending along the direction Z.

However, three-dimensional deposition device 1 may have a structure in which the deposition head 18 moves along multiple axes, or a structure in which the deposition head 18 rotates about predetermined rotation axes (for example, three rotation axes). In this case, the rotation axis AX1 of the rotation mechanism 20 is preferably a rotation axis different from the rotation axis about which the deposition head 18 rotates (the rotation direction thereof may be the same). Specifically, the rotation axis AX1 of the rotation mechanism 20 is preferably a rotation axis different from the rotation axis used when deposition is executed with the deposition head 18 and, more specifically, the rotation mechanism 20 is preferably a mechanism different from the rotation mechanism used when deposition is executed with the deposition head 18. For example, when the rotation mechanism (rotation axis) used when deposition is executed with the deposition head 18 is made common with the rotation mechanism 20 (rotation axis AX1), it is required to achieve a rotation angle suitably suppressing entrance of a foreign substance for the rotation mechanism used when deposition is executed with the deposition head 18. In this case, the rotation mechanism used when deposition is executed is required to achieve a large rotation angle, for example, 85° to 95°, with respect to the vertical direction. However, when the rotation mechanism used when deposition is executed is provided with such a large rotation angle, such a structure may cause complication and/or increase in length of the deposition head structure, and cause an influence on the deposition accuracy. In contrast, by separating the rotation mechanism (rotation axis) used for deposition from the rotation mechanism 20 (rotation axis AX1), it becomes unnecessary to increase the rotation angle of the rotation mechanism used when deposition is executed. This structure suppresses decrease in deposition accuracy without resulting complication and increase in size of the deposition head structure, while entrance of a foreign substance is suppressed with the rotation mechanism 20.

In addition, the fiber connection port 48 is provided in a surface (end portion 40B) opposite to the surface (end portion 40A) provided with the powder jetting port 44B and the light beam irradiation port 42B, in the deposition head 18. For example, when the fiber connection port 48 is disposed in a side surface (surface on the horizontal direction side) of the deposition head 18, the optical path becomes complicated, such as bending the optical path of the light beam L to guide the light beam L made incident on the fiber connection port 48 in the side surface to the light beam irradiation port 42B in the bottom surface. This structure may increase the size of the device. By contrast, by providing the fiber connection port 48 in a surface opposite to the surface provided with the light beam irradiation port 42B and the powder jetting port 44B, the optical path of the light beam L is simplified, and this structure suppresses increase in size of the device.

In addition, the rotation mechanism 20 includes the first plate part 50 and the second plate part 52. The front surface 50A of the first plate part 50 crosses a plane orthogonal to the vertical direction. The second plate part 52 is fixed on the deposition head 18, and is rotatably connected to the first plate part 50 in the state in which the front surface 52A contacts the front surface 50A of the first plate part 50. The rotation mechanism 20 switches the three-dimensional deposition device 1 between the first state and the second state by rotation of the second plate part 52 with respect to the first plate part 50. The three-dimensional deposition device 1 is capable of properly switching between the first state and the second state, with the first plate part 50 and the second plate part 52 serving as the rotation mechanism 20. In addition, axis deviation of the deposition head 18 is suitably suppressed by bringing the front surfaces of the first plate part 50 and the second plate part 52 into contact.

In addition, the rotation mechanism 20 includes the rotation shaft portion 20a serving as the rotation axis of the second plate part 52 with respect to the first plate part 50, the positioning portion 20c2 positioning the second plate part 52 in the second state, and the fixing portion 20b2 fixing the second plate part 52 in the second state. The three-dimensional deposition device 1 is capable of rotating the second plate part 52 about the rotation shaft portion 20a, and fixing the second plate part 52 in the second state with the fixing portion 20b2 in a state in which the second plate part 52 is positioned with the positioning portion 20c2. This structure enables proper switching to the second state.

The three-dimensional deposition device 1 further includes the removable cover part 32 covering the fiber 24. The cover part 32 suppresses transmission of heat during deposition to the fiber 24 and the like. The cover part 32 does not interfere with the deposition head 18 in the first state, but interferes with the deposition head 18 in the second state. The cover part 32 does not interfere with the deposition head 18 in the first state in which deposition is executed, but in the second state where no cover part 32 is required, the cover part 32 can be removed, and therefore, even when the cover part 32 is provided, the three-dimensional deposition device 1 is enabled to properly switch between the first state and the second state and suppress entrance of a foreign substance. The cover part 32 may have a structure in which the cover part 32 does not interfere with the deposition head 18 in the second state, either.

The three-dimensional deposition device 1 further includes the pulley part 28 provided on the direction Z1 side beyond the deposition head 18 and movably holds the fiber 24. The three-dimensional deposition device 1 is enabled to properly hold the fiber 24 by holding the fiber 24 with the pulley part 28.

The method for replacing the fiber 24 according to the present embodiment includes: a first rotation step of rotating the deposition head 18 about the rotation axis AX1 crossing the vertical direction from the first state to switch the deposition head 18 to the second state; a removal step of removing the fiber 24 from the fiber connection port 48 of the deposition head 18 switched to the second state; an attachment step of attaching the fiber 24 or another fiber to the fiber connection port 48 of the deposition head 18 from which the fiber 24 has been removed in the removal step; and a second rotation step of rotating the deposition head 18 to which the fiber 24 has been attached in the attachment step to switch the deposition head 18 from the second state to the first state. The replacing method allows the fiber 24 to be removed after switching to a second state, thereby enabling suppression of entrance of a foreign substance, and has a structure also switchable to the first state, thereby enabling suppression of increase in size of the device.

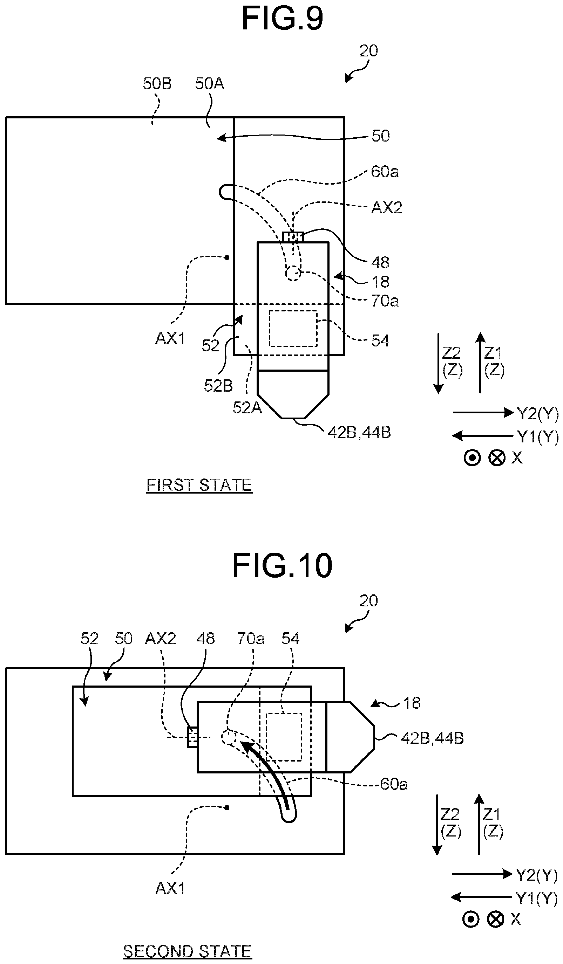

The rotation mechanism 20 according to the present embodiment has a structure in which the second plate part 52 rotates about the rotation shaft portion 20a with respect to the first plate part 50, but the structure of the rotation mechanism 20 is not limited thereto. FIG. 9 and FIG. 10 are schematic diagrams illustrating another example of the rotation mechanism according to the present embodiment. In FIG. 9 and FIG. 10, the first plate part 50 of the rotation mechanism 20 includes a groove portion 60a. The groove portion 60a is a groove provided in the front surface 50A of the first plate part 50, and has an arc-like shape with the rotation axis AX1 serving as the center. In addition, in the example of FIG. 9 and FIG. 10, the shaft portion 70a of the second plate part 52 is movably inserted into the groove portion 60a. In the first state illustrated in FIG. 9, the shaft portion 70a is positioned at one end portion of the groove portion 60a. By moving the shaft portion 70a along the groove portion 60a, the second plate part 52 rotates with the rotation axis AX1 serving as the central axis to the second state in which the shaft portion 70a is positioned at the other end portion of the groove portion 60a. As described above, the rotation mechanism 20 may be provided with the groove portion 60a to rotate the second plate part 52.

The rotation mechanism 20 does not necessarily have the structure of including the first plate part 50 and the second plate part 52, as long as the rotation mechanism 20 is capable of switching the first state and the second state by rotating the deposition head 18. For example, the rotation mechanism 20 may be a mechanism that includes a shaft and a coupling and rotates the deposition head 18 with a motor serving as a drive source, or a mechanism that includes a crank mechanism and a cylinder and rotates the deposition head 18 with the crank mechanism by driving the cylinder. The drive source of the cylinder in this case may be any drive source, such as air, an electric motor, or manpower. The rotation mechanism 20 may be a mechanism rotating the deposition head 18 with a circular rail. A key may be provided as the positioning portion, part of the outer circumference may be a flat surface, and the other part of the outer circumference may have a circumferential shape. As another example, the rotation mechanism 20 may be a mechanism rotating the deposition head 18 with a planetary gear. As another example, the rotation mechanism 20 may be provided with an additional mechanism in which a gear is used as a reduction gear to reduce the force required for rotation.

The embodiment of the present invention has been described above, but the embodiment is not limited to the details of the embodiment. The constituent elements described above include elements that can be easily conceived by the skilled person, substantially the same elements, and elements of an equivalent range. The constituent elements described above may be used in proper combinations. Various omissions, replacement, and changes of the constituent elements are possible within the range not departing from the gist of the embodiment described above.

### Reference Signs List

- 1: three-dimensional deposition device
- 12: base moving part
- 14: base part
- 18: deposition head
- 20: rotation mechanism
- 22: head moving part
- 24: fiber
- 42B: light beam irradiation port
- 44B: powder jetting port
- 48: fiber connection port
- 50: first plate part
- 52: second plate part

## Claims

1. A three-dimensional deposition device comprising:
a deposition head provided with a powder jetting port from which powder is jetted, a light beam irradiation port from which a light beam is emitted, and a fiber connection port that is connected to a fiber guiding the light beam;
a head moving part that moves the deposition head along a vertical direction;
a base part to which the powder is jetted and the light beam is emitted from the deposition head;
a base moving part that moves the base part along a first direction orthogonal to the vertical direction and a second direction orthogonal to the vertical direction and the first direction; and
a rotation mechanism that is connected to the deposition head and rotates the deposition head about a rotation axis crossing the vertical direction, wherein
the rotation mechanism switches, by rotating the deposition head, between a first state in which the fiber connection port is opened upward in the vertical direction and a second state in which the fiber connection port is opened in a direction crossing the upward vertical direction.

2. The three-dimensional deposition device according to claim 1, wherein a maximum rotation angle of the rotation mechanism is larger than an angle made with a central axis of the deposition head with respect to the vertical direction in formation of the deposited body.

3. The three-dimensional deposition device according to claim 1 or 2, wherein the fiber connection port is opened in a direction crossing the vertical direction at an angle of 85° to 95° in the second state.

4. The three-dimensional deposition device according to any one of claims 1 to 3, wherein the fiber connection port is provided in a surface opposite to a surface provided with the light beam irradiation port in the deposition head.

5. The three-dimensional deposition device according to any one of claims 1 to 4, wherein
the rotation mechanism includes
a first plate part having a front surface crossing a plane orthogonal to the vertical direction; and
a second plate part that is fixed on the deposition head and rotatably connected to the first plate part in a state in which a front surface thereof contacts the front surface of the first plate part, and
the rotation mechanism switches between the first state and the second state by rotation of the second plate part with respect to the first plate part.

6. The three-dimensional deposition device according to claim 5, wherein the rotation mechanism includes a rotation shaft portion that serves as a rotation axis of the second plate part with respect to the first plate part, a positioning portion that positions the second plate part in the second state, and a fixing portion that fixes the second plate part in the second state.

7. The three-dimensional deposition device according to any one of claims 1 to 6, further comprising a removable cover part that covers the fiber, the cover part not interfering with the deposition head in the first state but interfering with the deposition head in the second state.

8. The three-dimensional deposition device according to any one of claims 1 to 7, further comprising a pulley part that is provided above the deposition head in the vertical direction and movably holds the fiber.

9. A method for replacing a fiber from a three-dimensional deposition device that includes
a deposition head provided with a powder jetting port from which powder is jetted, a light beam irradiation port from which a light beam is emitted, and a fiber connection port that is connected to a fiber guiding the light beam; a head moving part that moves the deposition head along a vertical direction;
a base part to which the powder is jetted and the light beam is emitted from the deposition head; and
a base moving part that moves the base part along a first direction orthogonal to the vertical direction and a second direction orthogonal to the vertical direction and the first direction, the method comprising:
a first rotation step of rotating the deposition head about a rotation axis crossing the vertical direction from a first state in which the fiber is attached to the fiber connection port and the fiber connection port is oriented upward in the vertical direction to switch the deposition head to a second state in which the fiber connection port crosses the upward vertical direction;
a removal step of removing the fiber from the fiber connection port of the deposition head switched to the second state;
an attachment step of attaching the fiber or another fiber to the fiber connection port of the deposition head from which the fiber has been removed by the removal step; and
a second rotation step of rotating the deposition head to which the fiber has been attached by the attachment step to switch the deposition head from the second state to the first state.
